# EUROPÄISCHE PATENTSCHRIFT

(11) **EP 2 250 400 B1**
(45) Veröffentlichungstag und Bekanntmachung des Hinweises auf die Patenterteilung: **24.08.2011**
(21) Anmeldenummer: 08872966.0
(22) Anmeldetag: 12.12.2008
(51) Int. Cl.: F16H 7/12

(54) **REIB- UND DÄMPFUNGSELEMENT MIT INTEGRIERTER DICHTLIPPE**
FRICTION AND DAMPING ELEMENT WITH INTEGRATED SEALING LIP
ELÉMENT DE FRICTION ET D AMORTISSEMENT AVEC LÈVRE D ÉTANCHÉITÉ INTÉGRÉE

(30) Priorität: 28.02.2008 DE 102008011786
(43) Veröffentlichungstag der Anmeldung: 17.11.2010
(73) Patentinhaber: Schaeffler Technologies GmbH & Co. KG, 91074 Herzogenaurach (DE)
(72) Erfinder: THOMANN, Christine, 91438 Bad Windsheim/Lenkersheim (DE); SEBALD, Bernd, 91330 Eggolsheim (DE); ROST, Christoph, 91443 Scheinfeld (DE)
(86) Internationale Anmeldenummer: PCT/EP2008/067420
(87) Internationale Veröffentlichungsnummer: WO 2009/106180

(56) Entgegenhaltungen:
- EP-A- 0 780 597
- WO-A-2005/064203
- DE-A1- 3 728 158
- DE-A1- 10 252 432
- DE-A1-102005 047 265

## Beschreibung

### Gebiet der Erfindung

Die vorliegende Erfindung betrifft ein Spannsystem eines Zugmitteltriebs gemäβ dem Oberbegrift des Anspruchs 1, und wie es aus dem gattungsgemäßen DE 3728158A bekannt ist.

### Hintergrund der Erfindung

Derartige Spannsysteme sind in vielfachen Ausführungen, beispielsweise aus der DE 100 63 639, der JP 2003 222 211 A oder der EP 0 780 597 A bekannt. Bei all diesen bekannten Lösungen sind keine Maßnahmen vorgesehen, die wirksam einen zu Funktionseinschränkungen oder zu Funktionsausfällen führenden Eintrag von Verunreinigungen in einen Innenraums des Spannsystems unterbinden.

### Zusammenfassung der Erfindung

Der vorliegenden Aufgabe liegt daher die Aufgabe zugrunde, Maßnahmen zur Erzielung einer verbesserten Funktionssicherheit von Spannsystemen aufzuzeigen.

Ausgehend von einem Spannsystem gemäß dem Oberbegriff des unabhängi gen Anspruchs 1 wird die Aufgabe erfindungsgemäß mitlen Merkmalen der Anspruchs 1 gelöst. Dieser Vorteil kann ohne ein weiteres separates Bauteil realisiert werden. Außerdem erfordert das erfindungsgemäß gestaltete Reib- und Dämpfungselementes keinen erhöhten Montageaufwand, bzw. beeinflusst die Gestaltung der Bauteile, mit denen die Dichtung zusammenwirkt.

Im Vergleich zu einem bisherigen Spannsystem ohne Abdichtung des Spannsystem-Innenraums kann eine höhere Lebensdauer erzielt werden, da sich kein nachteiliger Einfluss durch eine Kontamination insbesondere der Gleitlagerung einstellt. Vorteilhaft wird durch die erfindungsgemäße Dichtung die Zuverlässigkeit des Spannsystems deutlich erhöht, wobei dieser gewünschte Vorteil mit einem geringen Kostenmehraufwand erreichbar ist. Ein weiterer Vorteil ergibt sich dadurch, dass durch die erfindungsgemäße Dichtung eine bislang teilweise eingesetzte separate Abdichtung der Gleitlagerung entfallen kann. Folglich stellt sich damit ein weiterer Vorteil durch die Erfindung ein, da die Anzahl der Einzelbauteile reduziert werden kann, verbunden mit einer Verringerung der Bauteilkosten. Gleichzeitig vereinfacht sich der Montageaufwand entscheidend durch eine geringere Anzahl von Zuführ- bzw. Montagestationen. Damit kann eine deutliche Kostenreduzierung durch Einsparung einer Montagelinie erzielt werden und andererseits eine höhere Taktzahl vorgegeben werden.

Weitere vorteilhafte Ausgestaltungen der Erfindung sind Gegenstand der abhängigen Ansprüche 2-7.

Ein bevorzugter Aufbau der erfindungsgemäßen Dichtung sieht vor, diese mit zwei radial zueinander versetzten Dichtlippen zu versehen. Dabei ist die radial äußere Dichtlippe im Einbauzustand kraftschlüssig an dem Spannrollenträger und die innere Dichtlippe an der Reibscheibe abgestützt. Alternativ dazu bietet es sich an die Dichtung so auszubilden, dass deren Dichtlippen ein T-förmiges Querschnittsprofil bilden. Dieser Aufbau eignet sich insbesondere für einen Spannsystemaufbau, bei der ein relativ enger Ring- oder Dichtspalt zwischen der Reibscheibe und dem Spannrollenträger vorgesehen ist.

Zur Schaffung eines Multifunktionsbauteils ist das erfindungsgemäße Reib-und Dämpfungselement neben der Dichtung weiterhin auf der von der Dichtung abgewandten Seite einstückig mit einem axial vorstehenden ein Federende der Torsionsfeder außenseitig umschließenden Ansatz versehen. Vorteilhaft ist dabei der Ansatz so gestaltet, dass dieser in einer Aufnahme das Federende formschlüssig aufnimmt. Damit kann ein positiver Einfluss auf die Federanordnung sowie die Dämpfungscharakteristik des Spannsystems genommen werden, da sich eine vergrößerte Kontaktfläche zwischen dem Ende der Torsionsfeder und der Abstützung an der Innenwand des Spannrollenträgers einstellt.

Zur Schaffung eines wirksamen und kostengünstigen Bauteils, ist das Reib-und Dämpfungselement als ein Einkomponenten-Kunststoffbauteil aufgebaut und gestaltet. Alternativ dazu bietet es sich an das Reib- und Dämpfungselement als ein Zweikomponenten-Kunststoffbauteil zu gestalten. Zur Erreichung einer bauteilsteifen Anordnung ist gemäß der Erfindung weiterhin vorgesehen, das Reib- und Dämpfungselement als ein Kunststoffbauteil mit einem metallischen Trägermaterial zu versehen.

### Kurze Beschreibung der Zeichnungen

Die Erfindung wird im Folgenden anhand der beigefügten Zeichnungen näher erläutert, wobei sich die Erfindung nicht auf diese Ausführungsbeispiele beschränken. Es zeigen:
- Figur 1: eine Schnittdarstellung eines erfindungsgemäß ausgebildeten Spannsystems;
- Figur 2: in einer vergrößerten Darstellung einen Ausschnitt des Spannsystems gemäß Figur 1;
- Figur 3: einen Ausschnitt gemäß Figur 2 mit einer alternativ gezeigten Dichtung;
- Figur 4: die erfindungsgemäße Dichtung mit einem Einzelteil in einer Perspektive.

### Detaillierte Beschreibung der Zeichnungen

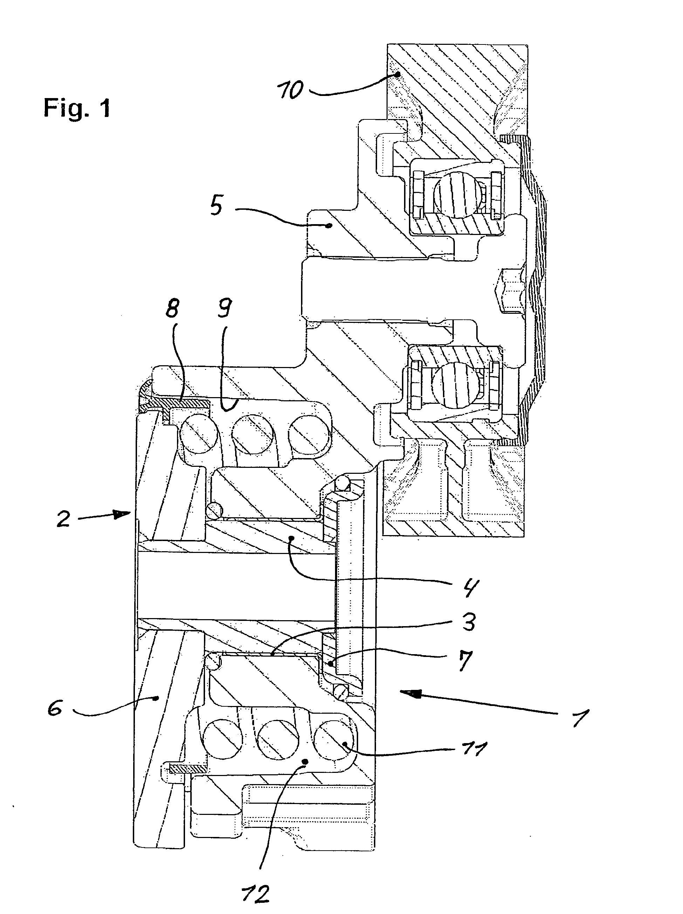

Die Figur 1 zeigt ein Spannsystem 1, das ein ortsfestes Basisteil 2 umfasst, welches an einem in Figur 1 nicht näher dargestellten Gehäuse einer Brennkraftmaschine, vorzugsweise mittels Verschraubungen befestigt ist. Über eine aus einer oder mehreren vorwiegend Gleitlagerbuchsen bestehenden Gleitlagerung 3 ist ein Spannrollenträger 5 auf einer Welle 4 drehbar angeordnet. Die Welle 4 ist mit einem Ende drehfest einer Reibscheibe 6 zugeordnet und mit dem gegenüberliegenden Ende mit einem Flansch 7 verbunden, über den das Spannsystem 1 an der Brennkraftmaschine befestigt ist. Die Reibscheibe 6 ist ihrerseits mit einem Reib- und Dämpfungselement 8 drehfest verbunden, welches umfangsseitig an einer Innenwandung 9 des Spannrollenträgers 5 formschlüssig anliegt. Dazu ist das Reib- und Dämpfungselement 8 mit einem radialen Freiheitsgrad an der Reibscheibe 6 befestigt. Über ein als Torsionsfeder ausgelegtes Federelement 11 besteht eine kraftschlüssige Abstützung des Reib- und Dämpfungselementes 8 an der Reibscheibe 6. Das Federelement 11 bewirkt weiterhin eine in Umfangsrichtung wirkende Kraftkomponente auf den Spannrollenträger 5, der im Einbauzustand des Spannsystems 1 kraftschlüssig über eine endseitig positionierte Spannrolle 10 an einem nicht abgebildeten Zugmittel eines Zugmitteltriebs abgestützt ist. Als Maßnahme zur Vermeidung eines Eintrags von Verunreinigungen in einem Innenraum 12 des Spannsystems 1 ist das Reib- und Dämpfungselement 8 mit einer Dichtung 13 versehen, die einen sich bildenden Dichtspalt 21 zwischen der Reibscheibe 6 und dem Spannrollenträger 5 abdichtet.

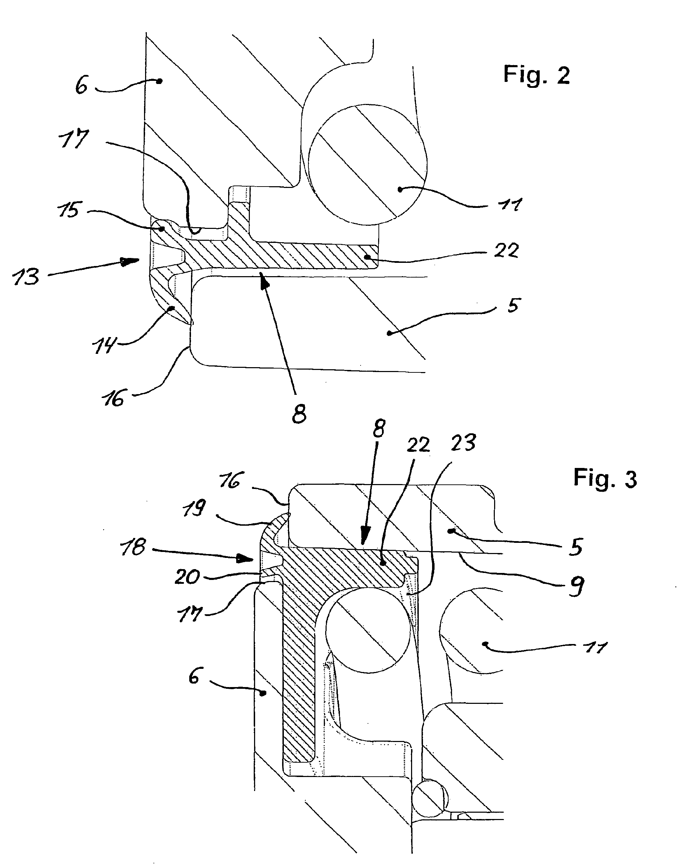

Die Figur 2 verdeutlicht in einer größeren Darstellung eines Details des Spannsystems 1 den Aufbau der zwei Dichtlippen 14, 15 umfassenden Dichtung 13. Die radial äußere Dichtlippe 14 stützt sich dabei an einer Stirnseite 16 des Spannrollenträgers 5 ab. Die weitere Dichtlippe 15 ist an einer Mantelfläche 17 der Reibscheibe 6 abgestützt.

Alternativ zu dem Ausführungsbeispiel gemäß Figur 2 ist das Reib- und Dämpfungselement 8 gemäß Figur 3 mit einer Dichtung 18 versehen, deren Dichtlippen 19, 20 ein T-förmiges Querschnittsprofil bilden. Diese Darstellung zeigt außerdem einen einstückig mit dem Reib- und Dämpfungselement 8 verbundenen an der Innenwandung 9 abgestützten Ansatz 22 mit integrierter Aufnahme 23 in die zur formschlüssigen Befestigung ein Federende des Federelementes 11 eingreift.

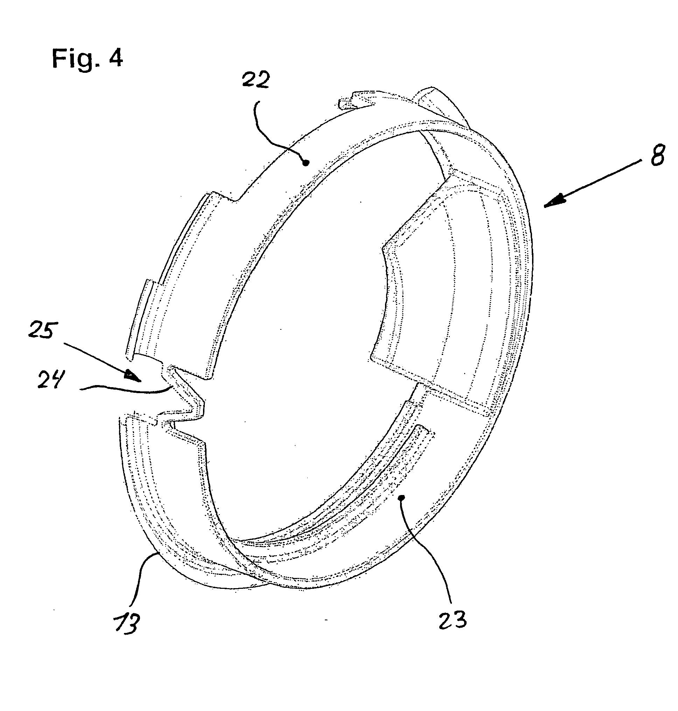

Die Figur 4 zeigt das geschlitzte Reib- und Dämpfungselement 8 in einer Einzelteilzeichnung, deren Enden im Bereich des Schlitzes 25 über eine elastische Verbindung 24 gekoppelt sind. Diese Anordnung ermöglicht im Einbauzustand eine optimale Anpassung an die Umgebungskonstruktion. Das Reib-und Dämpfungselement 8 umfasst eine einseitig stirnseitige Anordnung der Dichtung 13, die im nicht eingebauten Zustand geneigt ausgeführt ist, wodurch sich im Einbauzustand eine kraftschlüssige Abstützung an dem Spannrollenträger 5 und/ oder der Reibscheibe 6 einstellt.

### Bezugszahlen liste

- 1: Spannsystem
- 2: Basisteil
- 3: Gleitlagerung
- 4: Welle
- 5: Spannrollenträger
- 6: Reibscheibe
- 7: Flansch
- 8: Reib- und Dämpfungselement
- 9: Innenwandung
- 10: Spannrolle
- 11: Federelement
- 12: Innenraum
- 13: Dichtung
- 14: Dichtlippe
- 15: Dichtlippe
- 16: Stirnseite
- 17: Mantelfläche
- 18: Dichtung
- 19: Dichtlippe
- 20: Dichtlippe
- 21: Dichtspalt
- 22: Ansatz
- 23: Aufnahme
- 24: Verbindung
- 25: Schlitz

## Patentansprüche

1. Spannsystem eines Zugmitteltriebs, insbesondere eines Riemen- oder Kettentriebs einer Brennkraftmaschine mit einem ortsfesten Basisteil (2) und zugehöriger Welle (4), auf der über eine Gleitlagerung (3) ein Spannrollenträger (5) mit zugehöriger Spannrolle (10) schwenkbar ist, wobei die Welle (4) an einem Ende mit einer Reibscheibe (6) und dem weiteren Ende mit einem Flansch zur Befestigung des Spannsystems (1) verbunden ist und der Reibscheibe (6) ein Reib- und Dämpfungselement (8) zugeordnet ist, an dem ein Federelement (11) mit einem Federende drehfest abstützt ist und das Federelement (11) gegenseitig mit dem Spannrollenträger (5) verbunden ist, zur Einleitung eines Kraftmoments in den Spannrollenträger (5), wobei das Reib-und Dämpfungselement (8) einstückig mit einer umlaufenden, in einem Ring- oder Dichtspalt (21) zwischen der ortsfesten Reibscheibe (6) und dem schwenkbaren Spannrollenträger (5) eingreifenden Dichtung (13, 18) verbunden ist, **dadurch gekennzeichnet, dass** die Dichtung (13, 18) zwei radial zueinander versetzte Dichtlippen (14, 15; 19, 20) umfasst.

2. Spannsystem nach Anspruch 1, **dadurch gekennzeichnet, dass** die äußere Dichtlippe (14, 19) der Dichtung (13,18) an dem Spannrollenträger (5) und die innere Dichtlippe (15, 20) der Dichtung (13,18) an der Reibscheibe (6) abgestützt ist.

3. Spannsystem nach Anspruch 1, **dadurch gekennzeichnet, dass** die Dichtlippen (19, 20) der einstückig mit dem Reib- und Dämpfungselement (8) verbundenen Dichtung (18) ein T-förmiges Querschnittsprofil bilden.

4. Spannsystem nach Anspruch 1, **dadurch gekennzeichnet, dass** das Reib- und Dämpfungselement (8) auf der von der Dichtung (13, 18) abgewandten Seite einstückig mit einem axial vorstehenden, das Federelement (11) außenseitig umschließenden Ansatz (23) versehen ist.

5. Spannsystem nach Anspruch 4, **dadurch gekennzeichnet, dass** der Ansatz (23) eine Aufnahme (24) bildet, in der ein Federende des Federelementes (11) formschlüssig eingreift.

6. Spannsystem nach Anspruch 1, **dadurch gekennzeichnet, dass** das Reib- und Dämpfungselement (8) als ein Einkomponenten-Kunststoffbauteil oder als ein Zweikomponenten-Kunststoffbauteil aufgebaut und gestaltet ist.

7. Spannsystem nach Anspruch 1, **dadurch gekennzeichnet, dass** das Reib- und Dämpfungselement (8) als ein Kunststoffbauteil mit einem metallischen Trägermaterial aufgebaut ist.

## Claims

1. Tensioning system of a traction mechanism drive, in particular of a belt or chain drive of an internal combustion engine, having a positionally fixed base part (2) and associated shaft (4) on which, by means of a plain bearing arrangement (3), a tensioning roller carrier (5) with associated tension roller (10) is pivotable, wherein the shaft (4) is connected at one end to a friction disc (6) and at the other end to a flange for fastening the tensioning system (1), and the friction disc (6) is assigned a friction and damping element (8) on which a spring element (11) is supported in a rotationally fixed manner with one spring end, and the spring element (11) is connected at the opposite side to the tensioning roller carrier (5) in order to introduce a moment of force into the tension roller carrier (5), wherein the friction and damping element (8) is integrally connected to an encircling seal (13, 18) which engages into an annular or sealing gap (21) between the positionally fixed friction disc (6) and the pivotable tensioning roller carrier (5), **characterized in that** the seal (13, 18) comprises two sealing lips (14, 15; 19, 20) radially offset with respect to one another.

2. Tensioning system according to Claim 1, **characterized in that** the outer sealing lip (14, 19) of the seal (13, 18) is supported on the tensioning roller carrier (5) and the inner sealing lip (15, 20) of the seal (13, 18) is supported on the friction disc (6).

3. Tensioning system according to Claim 1, **characterized in that** the sealing lips (19, 20) of the seal (18) which is integrally connected to the friction and damping element (8) form a T-shaped cross sectional profile.

4. Tensioning system according to Claim 1, **characterized in that** the friction and damping element (8) is provided, on the side facing away from the seal (13, 18), with an integral axially projecting extension (23) which surrounds the spring element (11) at the outside.

5. Tensioning system according to Claim 4, **characterized in that** the extension (23) forms a receptacle (24) into which one spring end of the spring element (11) engages in a positively locking manner.

6. Tensioning system according to Claim 1, **characterized in that** the friction and damping element (8) is constructed and designed as a single-component plastic part or as a two-component plastic part.

7. Tensioning system according to Claim 1, **characterized in that** the friction and damping element (8) is constructed as a plastic component with a metallic carrier material.

## Revendications

1. Système de serrage d'un entraînement à moyen de traction, notamment d'un entraînement à courroie ou à chaîne d'un moteur à combustion interne, comprenant une partie de base fixe (2) et un arbre associé (4) sur lequel un support de rouleaux de serrage (5) avec un rouleau de serrage associé (10) peut pivoter par le biais d'un palier lisse (3), l'arbre (4) étant connecté à une extrémité à un disque de friction (6) et à l'autre extrémité à une bride pour la fixation du système de serrage (1) et le disque de friction (6) étant associé à un élément de friction et d'amortissement (8) sur lequel est supporté, de manière solidaire en rotation, un élément de ressort (11) avec une extrémité de ressort, et l'élément de ressort (11) étant connecté de l'autre côté au support de rouleau de serrage (5), pour introduire un couple dans le support de rouleau de serrage (5), l'élément de friction et d'amortissement (8) étant connecté d'une seule pièce à un joint d'étanchéité (13, 18) périphérique, venant en prise dans une fente annulaire ou d'étanchéité (21) entre le disque de friction fixe (6) et le support de rouleau de serrage pivotant (5), **caractérisé en ce que** le joint d'étanchéité (13, 18) comprend deux lèvres d'étanchéité décalées radialement l'une par rapport à l'autre (14, 15 ; 19, 20).

2. Système de serrage selon la revendication 1, **caractérisé en ce que** la lèvre d'étanchéité extérieure (14, 19) du joint d'étanchéité (13, 18) est supportée sur le support de rouleau de serrage pivotant (5) et la lèvre d'étanchéité intérieure (15, 20) du joint d'étanchéité (13, 18) est supportée sur le disque de friction (6).

3. Système de serrage selon la revendication 1, **caractérisé en ce que** les lèvres d'étanchéité (19, 20) du joint d'étanchéité (18) connecté d'une seule pièce à l'élément de friction et d'amortissement (8) forment un profilé de section transversale en forme de T.

4. Système de serrage selon la revendication 1, **caractérisé en ce que** l'élément de friction et d'amortissement (8) est pourvu du côté opposé au joint d'étanchéité (13, 18) d'une seule pièce d'un élément rapporté (23) saillant axialement, entourant du côté extérieur l'élément de ressort (11).

5. Système de serrage selon la revendication 4, **caractérisé en ce que** l'élément rapporté (23) forme un logement (24) dans lequel s'engage, par engagement par correspondance géométrique, une extrémité de ressort de l'élément de ressort (11).

6. Système de serrage selon la revendication 1, **caractérisé en ce que** l'élément de friction et d'amortissement (8) est construit et configuré sous forme de composant en plastique à un seul composant ou sous forme de composant en plastique à deux composants.

7. Système de serrage selon la revendication 1, **caractérisé en ce que** l'élément de friction et d'amortissement (8) est construit sous forme de composant en plastique avec un matériau de support métallique.
